# EUROPÄISCHE PATENTSCHRIFT

(11) **EP 3 750 662 B1**
(45) Veröffentlichungstag und Bekanntmachung des Hinweises auf die Patenterteilung: **24.08.2022**
(21) Anmeldenummer: 20174664.1
(22) Anmeldetag: 14.05.2020
(51) Int. Cl.: B23K 26/03, B23K 26/21, B23K 26/70

(54) **SYSTEM UMFASSEND EINE PRÜFEINRICHTUNG FÜR EINE LASERVERARBEITUNGSVORRICHTUNG, UND VERWENDUNG EINES SOLCHEN SYSTEMS ZUR EINSTELLUNG EINER SOLCHEN LASEREINRICHTUNG ZUR VERARBEITUNG VON LICHTWELLENLEITER**
SYSTEM COMPRISING AN INSPECTION DEVICE FOR LASER PROCESSING DEVICE, AND USE OF SUCH SYSTEM FOR ADJUSTING SUCH LASER DEVICE FOR PROCESSING FIBER OPTIC
SYSTÈME COMPRENANT UN DISPOSITIF DE TEST POUR UN APPAREIL D'USINAGE LASER, ET UTILISATION D'UN TEL SYSTEME POUR LE REGLAGE D'UN TEL APPAREIL POUR LE TRAITEMENT DE FIBRE OPTIQUE

(30) Priorität: 17.05.2019 DE 102019207237
(43) Veröffentlichungstag der Anmeldung: 16.12.2020
(73) Patentinhaber: Schäfer Werkzeug- und Sondermaschinenbau GmbH, 76669 Bad Schönborn (DE)
(72) Erfinder: Schäfer, Alexander, 76669 Bad Schönborn-Langenbrücken (DE); Saleh, Rekar, 76669 Bad Schönborn-Langenbrücken (DE)
(74) Vertreter: Hoffmann Eitle

(56) Entgegenhaltungen:
- EP-A1- 1 211 015
- EP-A1- 1 967 316
- DE-A1- 19 804 029
- US-A1- 2018 328 725

## Beschreibung

Die Erfindung betrifft ein System mit einer Prüfeinrichtung für eine Laserverarbeitungsvorrichtung oder eine Kalibrierstation sowie die Verwendung eines Systems mit einer Prüfeinrichtung bei einer Laserverarbeitungsvorrichtung, insbesondere einer Laserverarbeitungsvorrichtung zur Verarbeitung von Lichtwellenleitern gemäß dem Oberbegriff der Ansprüche 1 und 8 (siehe z.B. US 2018/328725 A1).

### Stand der Technik

Eine Laserverarbeitungsvorrichtung zur Verarbeitung von Lichtwellenleitern umfasst eine Lasereinrichtung (nachfolgend auch als "Laserkopf" bezeichnet), um eine Ferrule über einen Schweißpunkt mit dem Lichtwellenleiter zu verbinden. Die Anordnung und Ausrichtung der Lasereinrichtung und damit die Ausrichtung des Laserstrahls zur Herstellung dieser Verbindung zwischen der transparenten Ferrule und der absorbierenden Lichtwellenleiter-Schicht wird bei Inbetriebnahme der Einrichtung eingestellt.

Dabei wird nach der Ausrichtung und Fixierung der Lasereinrichtung ein Testvorgang durchgeführt, um die Position des Laserpunkts anhand eines beispielhaften Schweißergebnisses visuell zu überprüfen. Wird das Schweißergebnis als ungenügend bewertet, so wird die Lasereinrichtung neu positioniert oder nachjustiert.

Somit handelt es sich bei der Einstellung der Lasereinrichtung zur Inbetriebnahme der Einrichtung zur Verarbeitung von Lichtwellenleitern um einen iterativen Prozess, der ein hohes Maß an Erfahrung erfordert. Auch ist ein derartiger Einstellprozess nicht zwingend reproduzierbar. Wird die Lasereinrichtung zur Wartung oder Überprüfung ausgebaut, muss entsprechend ein aufwändiges Verfahren durchgeführt werden, um die Einrichtung wieder in einen betriebsbereiten Zustand zu versetzen.

Ferner ist die DE 198 04 029 A1 bekannt, die eine Vorrichtung zur Sicherung, Überwachung und Verbesserung der Qualität von Lasern und Strahlführungssystemen für die Materialbearbeitung und Medizintechnik betrifft.

In der EP 1 211 015 A1 wird eine Verschleißkontroll-Einrichtung für Schneiddüsen von Laserschneidmaschinen mit mindestens einem in der X-Achse verfahrbaren Radkasten und einem einen mit mindestens einer Schneiddüse ausgerüsteten Schneidkopf in der Y-Achse verfahrenden Querwagen beschrieben.

Ferner ist das Dokument EP 1 967 316 A1 bekannt.

### Gegenstand der Erfindung

Ziel der vorliegenden Erfindung ist es, ein System mit einer Prüfeinrichtung bereitzustellen, mit der eine Einstellung einer Lasereinrichtung, insbesondere an einer Einrichtung zur Verarbeitung eines Lichtwellenleiters, vereinfacht werden kann und reproduzierbar wird.

Der Gegenstand des Anspruchs 1 stellt ein der Erfindung entsprechendes System bereit. Weitere bevorzugte Ausführungsformen sind in den abhängigen Ansprüchen aufgeführt. Ferner betrifft die Erfindung eine Verwendung eines Systems mit einer Prüfeinrichtung , siehe Anspruch 8.

Die Prüfeinrichtung hat dabei den Vorteil, dass mit dieser eine zügige und präzise Einstellung einer Lasereinrichtung einer Laserverarbeitungseinrichtung ermöglicht wird. Somit können im Zuge einer Inbetriebnahme, Wartung oder ähnlichem, Testläufe deutlich verkürzt oder gar vermieden werden. Ferner wird die Qualität der mit der Laserverarbeitungseinrichtung verarbeiteten oder hergestellten Produkte erhöht, da eine Schweißverbindung in objektiver Weise mit einer Soll-Vorgabe abgeglichen werden kann. Dieses Ergebnis kann auch zu Dokumentationszwecken verwendet werden, so dass der Betreiber der Laserverarbeitungsvorrichtung einen Nachweis über die Verarbeitungsgüte erbringen kann. Ferner ist die Prüfeinrichtung für eine Kalibrierstation geeignet.

Die Prüfeinrichtung hat ferner den Vorteil, dass bestimmte Systemkomponenten, wie z.B. die Laseroptik oder eine Verstelleinrichtung, reproduzierbar untersucht werden können. Dies ist sowohl bei einem Einsatz bei einer Laserverarbeitungseinrichtung als auch bei einer Kalibrierstation hilfreich.

Gemäß der Erfindung ist es vorgesehen, dass die Prüfeinrichtung und die Auswerteeinheit tragbar sind. Somit können die Prüfeinrichtung und die Auswerteeinheit mobil eingesetzt werden, um vor Ort eine Prüfmöglichkeit zur Bewertung und gegebenenfalls Einstellung einer Laserverarbeitungsvorrichtung bereitzustellen.

Erfindungsgemäß ist der Sensor eingerichtet, Konturkoordinaten, Lichtintensität und Intensitätsverteilung zu detektieren. Auf diese Weise kann eine Lasereinrichtung sowie deren Laserstrahl anhand objektiver Werte charakterisiert werden. Die hieraus gewonnenen Informationen können für die Einstellung einer Lasereinrichtung entsprechenden Typs an einer Laserverarbeitungsvorrichtung verwendet werden. Dies erleichtert die Tätigkeiten zur Vorbereitung einer Laserverarbeitungsvorrichtung für einen Produktionsprozess.

Erfindungsgemäß umfasst die Auswerteeinheit ein elektronisches Analysewerkzeug, um die von der Prüfeinrichtung erhaltenen Daten auszuwerten, so dass anhand der Konturkoordinaten, Lichtintensität und Intensitätsverteilung des erfassten Laserstrahls die Position und die Ausrichtung einer Lasereinrichtung (25) der Laserverarbeitungsvorrichtung eingestellt oder verändert werden kann.

Ein solches Analysewerkzeug kann beispielsweise als ein Programm auf einem Computer als eine Ausführungsform einer Auswerteeinheit gespeichert sein. Anhand des Analysewerkzeuges können beispielsweise Daten eines optischen Sensors, wie eines CCD-Sensors, ausgewertet werden.

Es ist bevorzugt, dass der Sensor ein optischer Sensor, beispielsweise ein CCD-Sensor, ist, der zur Erfassung des Laserstrahls geeignet ist.

Eine Übertragungseinrichtung zur Übertragung von Daten vom Sensor zu einer Auswerteeinheit kann als ein Anschluss ausgebildet sein, der am Gehäuse vorgesehen ist. Gemäß dieser Ausführungsform wird eine kabelgebundene Datenübertragung ermöglicht, die ein hohes Maß an Datensicherheit gewährleistet.

Gemäß einer weiteren Ausführungsform ist die Übertragungseinrichtung als Sendeeinheit ausgebildet. Die Sendeeinheit ist bevorzugt eingerichtet, Daten kabellos zu übertragen. Beispielsweise handelt es sich bei der Übertragungseinrichtung gemäß dieser Ausgestaltung um ein WLAN- oder Bluetooth-Modul. Auf diese Weise wird die Handhabbarkeit der Prüfeinrichtung in Kombination mit der Auswerteeinheit vereinfacht.

Es ist bevorzugt, dass der Fensterabschnitt, in Betriebsposition der Prüfeinrichtung, an einer oberen Seite des Gehäuses angeordnet ist. Auf diese Weise wird die Handhabung der Prüfeinrichtung erleichtert.

Es ist bevorzugt, dass das Gehäuse eine Auflagefläche zur Auflage des Gehäuses in einer Laserverarbeitungsvorrichtung aufweist. Die Auflagefläche kann dabei als Referenzfläche dienen.

Es ist auch möglich, dass die Auswerteeinheit mit einer Laserverarbeitungsvorrichtung, insbesondere einer Laserverarbeitungsvorrichtung zur Verarbeitung von Lichtwellenleitern, in Verbindung steht. Somit kann es gemäß einer weiteren Ausführungsform vor gesehen sein, dass die Lasereinrichtung mittels der Auswerteeinheit oder mittels der von der Auswerteeinheit ermittelten Informationen geregelt oder ausgerichtet wird. Beispielsweise können auf Grundlage von Echtzeit-Sensordaten Steuersignale an Verstell- oder Bewegungseinheiten der Lasereinrichtung gesendet werden.

### Kurze Beschreibung der Zeichnungen

- Fig. 1: zeigt eine erfindungsgemäße Prüfeinrichtung in einer Kalibrierstation.
- Fig. 2: zeigt eine Laserverarbeitungseinrichtung zur Bearbeitung eines Lichtwellenleiters, in die die Prüfeinrichtung eingefügt ist.

### Detaillierte Beschreibung der bevorzugten Ausführungsform

Anhand der Figuren wird eine bevorzugte Ausführungsform der Erfindung beschrieben. Obwohl die Ausführungsform rein beispielhaft, und nicht einschränkend, zu verstehen ist, können Einzelmerkmale der Ausführungsform auch zur Charakterisierung der Erfindung herangezogen werden. Ferner können Modifikationen der nachfolgend beschriebenen Ausführungsform jeweils einzeln miteinander kombiniert werden, um weitere Ausführungsformen der Erfindung auszubilden.

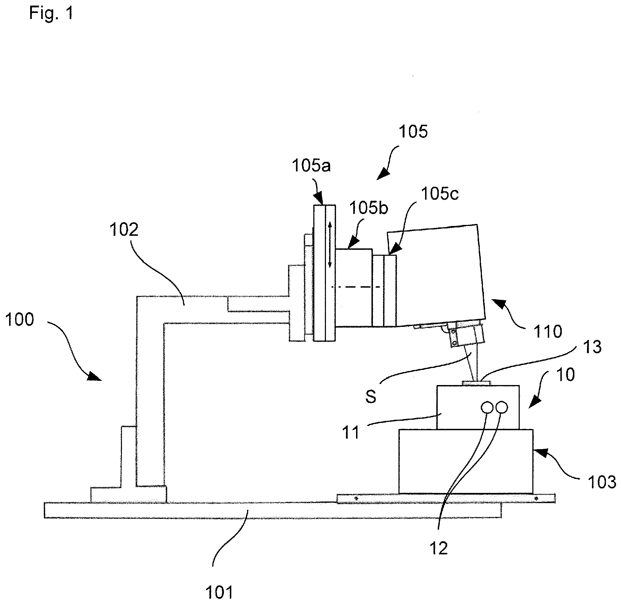

Fig. 1 zeigt eine Kalibrierstation 100, in die eine Prüfeinrichtung 10 eingebracht ist. Die Prüfeinrichtung 10 weist ein Gehäuse 11 mit mehreren Übertragungseinrichtungen, die im vorliegenden Ausführungsbeispiel als Schnittstellen 12 für eine kabelgebundene Datenübertragung ausgebildet sind, zum Datenaustausch und/oder zur Energieversorgung auf. An einer oberen Seite des Gehäuses 11 ist ein Fensterabschnitt 13 vorgesehen, durch den ein Laserstrahl ins Innere des Gehäuses 11 dringen kann.

Die Kalibrierstation 100 weist eine Grundplatte 101 sowie einen auslegerartigen Träger 102 auf, welcher Träger 102 an der Grundplatte 101 fixiert ist. Die Kalibrierstation 100 weist ferner einen Aufnahmetisch 103 auf, der die Prüfeinrichtung 10 aufnimmt. Am Halter 102 ist eine Lasereinrichtung 110 angebracht, die einer Lasereinrichtung entspricht, die auch bei einer (nachfolgend beschriebenen) Einrichtung zur Verarbeitung von Lichtwellenleitern Anwendung findet. Die Lasereinrichtung ist mittels eines Verstellmechanismus 105 abnehmbar am Träger 102 vorgesehen, so dass die Lasereinrichtung bei Bedarf gegen ein anderes Modell getauscht werden kann.

Der Verstellmechanismus 105 zur Anbringung der Lasereinrichtung am Träger 102 gewährleistet eine relative Beweglichkeit zwischen der Lasereinrichtung 110 und dem Träger 102, insbesondere in einer oder mehreren translatorischen und/oder einer oder mehreren rotatorischen Richtungen. Hierzu umfasst der Verstellmechanismus ein Verschiebemodul 105a, ein Schwenkmodul 105b sowie eine Kippeinrichtung 105c. Das Verschiebemodul 105a ermöglicht eine translatorische Relativbewegung zwischen Lasereinrichtung 110 und Träger 102, insbesondere in entlang einer vertikalen Richtung. Anhand des Schwenkmoduls 105b kann eine Drehbewegung der Lasereinrichtung 110 umgesetzt werden, wobei die Achse für die Drehbewegung senkrecht zu einer Ebene der Bewegung des Verschiebemodul 105a ausgerichtet ist. Ein Kippen der Lasereinrichtung 110 um eine horizontal verlaufende Achse kann mittels der Kippeinrichtung 105c gewährleistet werden. Auf diese Weise ist es möglich, den Laserstrahl S der Lasereinrichtung 110 derart auszurichten, dass dieser von der Prüfeinrichtung 10 aufgenommen werden kann.

Die Kalibrierstation 100 ist eingerichtet, Kennwerte einer bestimmten Lasereinrichtung zu ermitteln, insbesondere Konturkoordinaten, Lichtintensität und/oder Intensitätsverteilung eines Laserstrahls der Lasereinrichtung. Auf diese Weise kann eine Lasereinrichtung 110 beziehungsweise deren Laserstrahl S anhand objektiver Werte charakterisiert werden. Die hieraus gewonnenen Informationen können für die Einstellung einer Lasereinrichtung entsprechenden Typs an einer Laserverarbeitungsvorrichtung verwendet werden.

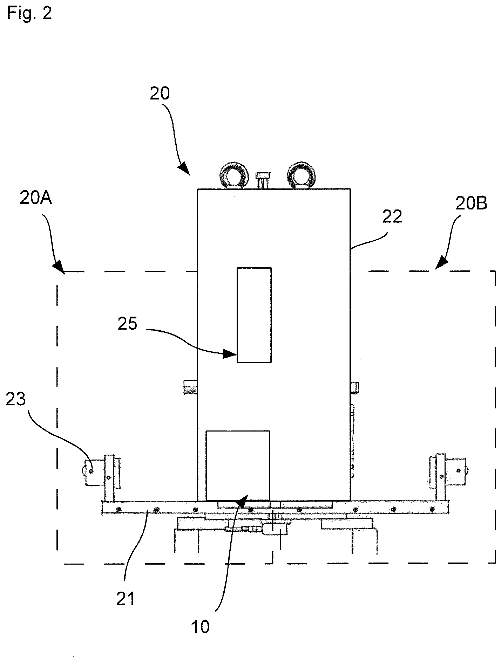

In Fig. 2 wird eine Laserverarbeitungsvorrichtung 20 dargestellt, die mit zwei Verarbeitungsplätzen 20A, 20B ausgestattet ist. Die Laserverarbeitungsvorrichtung 20 ist eingerichtet, mittels eines Schweißvorgangs eine Verbindung zwischen der transparenten Ferrule und einer absorbierenden Lichtwellenleiter-Schicht herbeizuführen.

Die Laserverarbeitungsvorrichtung 20 umfasst eine Basis 21 sowie ein an der Basis 21 angeordnetes Gehäuse 22, wobei am oder im Gehäuse 22 die bereits genannten Arbeitsplätze 20A, 20B angeordnet sind.

Nachfolgend sollen die Komponenten des ersten Arbeitsplatzes 20A beschrieben werden. Entsprechende Komponenten sind am weiteren Arbeitsplatz 20B spiegelbildlich vorgesehen, wobei sich die Arbeitsplätze auch voneinander unterscheiden können.

Die Laserverarbeitungsvorrichtung 20 umfasst im Bereich des ersten Arbeitsplatzes 20A eine Führungseinrichtung 23, mit der eine Ferrule (in Figur 2 nicht dargestellt) in einen Arbeitsbereich des Arbeitsplatzes 20A zugeführt wird (in Figur 2 von links nach rechts).

In den Arbeitsplatz 20A ist anstelle eines Arbeitswerkzeuges zum Positionieren oder Anlegen einer Ferrule an einem Lichtwellenleiter die Prüfeinrichtung 10 eingefügt, die der Lasereinrichtung (Laserkopf) 25 der Laserverarbeitungsvorrichtung 20 gegenüberliegt. Das Gehäuse (11) ist derart dimensioniert, dass ein Austausch gegen das Arbeitswerkzeug durchgeführt werden kann.

Durch die Lasereinrichtung 25 kann ein Laserstrahl S erzeugt werden, der für einen Schweißvorgang genutzt wird. Durch Anordnung der Prüfeinrichtung 10 am Arbeitsplatz 20A trifft der Laserstrahl S auf den Fensterabschnitt 13 des Gehäuses 11.

Innerhalb des Gehäuses 11 ist ein optischer Sensor derart vorgesehen, dass der optische Sensor, bei Draufsicht auf das Gehäuse 11, mit dem Fensterabschnitt 13 überlappend angeordnet ist. Trifft somit ein Laserstrahl S auf den Fensterabschnitt 13, wird dieser durch den Fensterabschnitt 13 transmittiert und kann vom optischen Sensor erfasst werden.

Mit der in der Laserverarbeitungsvorrichtung 20 aufgenommenen Prüfeinrichtung 10 kann nunmehr ein (Teil-)Betrieb der Laserverarbeitungsvorrichtung 20 durchgeführt werden, in Zuge dessen die Lasereinrichtung 25 einen Laserstrahl S auf den Fensterabschnitt 13 der Prüfeinrichtung 10 richtet. Der optische Sensor ermittelt die Konturkoordinaten, Intensitäten usw. des Laserstrahls.

Die vom optischen Sensor der Prüfeinrichtung 10 erfassten Daten werden mittels der Datenübertragungseinrichtung 12 der Prüfeinrichtung 10 zu einer Auswerteeinheit (nicht dargestellt) mit einem entsprechenden Analysewerkzeug übertragen. Die von der Prüfeinrichtung aufgenommenen Informationen werden mittels des Analysewerkzeugs verarbeitet, sodass u.a. anhand der Konturkoordinaten, Lichtintensität und Intensitätsverteilung des erfassten Laserstrahls die Position und die Ausrichtung der Lasereinrichtung 25 der Laserverarbeitungsvorrichtung 20 eingestellt oder verändert wird.

Eine Änderung der Position, Ausrichtung und/oder einer Einstellung der Lasereinrichtung 25 kann bei Inbetriebnahme, bei Wartung der Laserverarbeitungsvorrichtung 20 oder bei Tausch der Lasereinrichtung 25 durchgeführt werden. Die ermittelten Informationen können zusätzlich zu den bereits genannten Vorteilen auch zu Dokumentationszwecken verwendet werden, so dass die Güte der Verarbeitung einer bestimmten Charge nachgewiesen werden kann.

## Patentansprüche

1. System, umfassend eine Prüfeinrichtung (10) für eine Laserverarbeitungsvorrichtung oder eine Kalibrierstation sowie eine Auswerteeinheit zur Auswertung der Daten der Prüfeinrichtung (10), wobei die Prüfeinrichtung (10) umfasst:
ein Gehäuse (11) mit einem Fensterabschnitt (13), wobei das Gehäuse (11) in eine Laserverarbeitungsvorrichtung einführbar ist,
einen im Gehäuse (11) aufgenommenen Sensor zur Detektion eines durch den Fensterabschnitt (13) geführten Laserstrahls,
eine Übertragungseinrichtung zur Übertragung von Daten vom Sensor zu einer Auswerteeinheit, und
wobei die Prüfeinrichtung (10) und die Auswerteeinheit tragbar sind,
der Sensor eingerichtet ist, Konturkoordinaten, Lichtintensität und Intensitätsverteilung zu detektieren,
**dadurch gekennzeichnet, dass** die Auswerteeinheit ein elektronisches Analysewerkzeug umfasst, um die von der Prüfeinrichtung erhaltenen Daten auszuwerten, so dass anhand der Konturkoordinaten, Lichtintensität und Intensitätsverteilung des erfassten Laserstrahls die Position und die Ausrichtung einer Lasereinrichtung (25) der Laserverarbeitungsvorrichtung eingestellt oder verändert wird.

2. System gemäß Anspruch 1, **dadurch gekennzeichnet, dass** der Sensor ein optischer Sensor ist.

3. System gemäß einem der vorangegangenen Ansprüche, **dadurch gekennzeichnet, dass** die Übertragungseinrichtung ein am Gehäuse vorgesehener Anschluss oder eine Sendeeinheit ist.

4. System gemäß einem der vorangegangenen Ansprüche, **dadurch gekennzeichnet, dass** der Fensterabschnitt (13), in Betriebsposition der Prüfeinrichtung, an einer oberen Seite des Gehäuses (13) angeordnet ist.

5. System gemäß einem der vorangegangenen Ansprüche, **dadurch gekennzeichnet, dass** das Gehäuse (11) eine Auflagefläche zur Auflage des Gehäuses (11) in einer Laserverarbeitungsvorrichtung (20) oder einer Kalibrierstation aufweist.

6. System gemäß Anspruch 1, **dadurch gekennzeichnet, dass** die Auswerteeinheit mit einer Laserverarbeitungsvorrichtung, insbesondere einer Laserverarbeitungsvorrichtung zur Verarbeitung von Lichtwellenleitern, in Verbindung steht.

7. System gemäß einem der vorangegangenen Ansprüche, **dadurch gekennzeichnet**, das Analysewerkzeug zur Verarbeitung von Echtzeit-Daten eingerichtet ist.

8. Verwendung eines Systems umfassend eine Prüfeinrichtung (10) zur Einstellung einer Lasereinrichtung einer Laserverarbeitungsvorrichtung, insbesondere einer Laserverarbeitungsvorrichtung zur Verarbeitung von Lichtwellenleitern, sowie eine Auswerteeinheit zur Auswertung der Daten der Prüfeinrichtung (10), wobei die Prüfeinrichtung (10) und die Auswerteeinheit tragbar sind, und wobei
die Prüfeinrichtung (10) an der Laserverarbeitungsvorrichtung angeordnet und die Lasereinrichtung der Laserverarbeitungsvorrichtung betätigt wird, und
die von einem Sensor der Prüfeinrichtung (10) detektierten Werte zumindest teilweise zu einer Auswerteeinheit übertragen werden und der Sensor eingerichtet ist, Konturkoordinaten, Lichtintensität und Intensitätsverteilung zu detektieren,
**dadurch gekennzeichnet, dass** die Auswerteeinheit ein elektronisches Analysewerkzeug umfasst, um die von der Prüfeinrichtung erhaltenen Daten auszuwerten, so dass anhand der Konturkoordinaten, Lichtintensität und Intensitätsverteilung des erfassten Laserstrahls die Position und die Ausrichtung einer Lasereinrichtung (25) der Laserverarbeitungsvorrichtung eingestellt oder verändert werden kann.

9. Verwendung gemäß Anspruch 8, **dadurch gekennzeichnet, dass** anhand der Auswerteeinheit auf die Laserverarbeitungsvorrichtung eingewirkt wird.

## Claims

1. System comprising an inspection device (10) for a laser processing device or a calibration station as well as an evaluation unit for evaluating the data of the inspection device (10), the inspection device (10) comprising:
a housing (11) with a window section (13), wherein the housing (11) can be inserted into a laser processing device,
a sensor accommodated in the housing (11) for detecting a laser beam passing through the window section (13),
a transmission device for the transmission of data from the sensor to an evaluation unit, and
wherein the inspection device (10) and the evaluation unit are portable,
the sensor is configured to detect contour coordinates, light intensity and intensity distribution,
**characterised in that** the evaluation unit comprises an electronic analysis tool to evaluate the data obtained from the inspection device, so that the position and orientation of a laser device (25) of the laser processing device is adjusted or changed on the basis of the contour coordinates, light intensity and intensity distribution of the detected laser beam.

2. System according to claim 1, **characterised in that** the sensor is an optical sensor.

3. System according to one of the preceding claims, **characterised in that** the transmission device is a connection or a transmitting unit provided on the housing.

4. System according to one of the preceding claims, **characterised in that**, in the operating position of the inspection device, the window section (13) is arranged on an upper side of the housing (13).

5. System according to one of the preceding claims, **characterised in that** the housing (11) has a contact surface for the support of the housing (11) in a laser processing device (20) or a calibration station.

6. System according to claim 1, **characterised in that** the evaluation unit is connected with a laser processing device, in particular a laser processing device for processing optical fibres.

7. System according to one of the preceding claims, **characterised in that** the analysis tool is configured to process real-time data.

8. Use of a system comprising an inspection device (10) for adjusting a laser device of a laser processing device, in particular a laser processing device for processing optical fibres, as well as an evaluation unit for evaluating the data of the inspection device (10), wherein the inspection device (10) and the evaluation unit are portable, and wherein
the inspection device (10) is arranged on the laser processing device and the laser device of the laser processing device is actuated, and
the values detected by a sensor of the inspection device (10) are at least partially transmitted to an evaluation unit and the sensor is configured to detect contour coordinates, light intensity and intensity distribution,
**characterised in that** the evaluation unit comprises an electronic analysis tool for evaluating the data obtained from the inspection device, so that the position and orientation of a laser device (25) of the laser processing device can be adjusted or changed on the basis of the contour coordinates, light intensity and intensity distribution of the detected laser beam.

9. Use according to claim 8, **characterised in that** the evaluation unit is used to act on the laser processing device.

## Revendications

1. Système, comprenant un dispositif de test (10) destiné à un appareil de mise en œuvre de laser ou à une station de calibrage et une unité d'évaluation permettant d'évaluer les données du dispositif de test (10), dans lequel le dispositif de test (10) comprend :
un boîtier (11) avec une section formant fenêtre (13), dans lequel le boîtier (11) peut être introduit dans un appareil de mise en œuvre de laser,
un capteur logé dans le boîtier (11) et permettant de détecter un rayonnement laser guidé à travers la section formant fenêtre (13),
un dispositif de transfert permettant de transférer des données du capteur vers une unité d'évaluation, et
dans lequel le dispositif de test (10) et l'unité d'évaluation sont transportables,
le capteur est conçu pour détecter des coordonnées de contour, une intensité lumineuse et une répartition d'intensité,
**caractérisé en ce que** l'unité d'évaluation comprend un outil électronique d'analyse afin d'évaluer les données obtenues par le dispositif de test, de sorte que la position et l'orientation d'un dispositif laser (25) de l'appareil de mise en œuvre de laser sont ajustées ou modifiées en se basant sur les coordonnées de contour, l'intensité lumineuse et la répartition d'intensité du rayonnement laser détecté.

2. Système selon la revendication 1, **caractérisé en ce que** le capteur est un capteur optique.

3. Système selon l'une quelconque des revendications précédentes, **caractérisé en ce que** le dispositif de transfert est un raccordement fourni au niveau du boîtier ou une unité émettrice.

4. Système selon l'une quelconque des revendications précédentes, **caractérisé en ce que** la section formant fenêtre (13) est agencée au niveau d'un côté supérieur du boîtier (13) lorsque le dispositif de test est en position de fonctionnement.

5. Système selon l'une quelconque des revendications précédentes, **caractérisé en ce que** le boîtier (11) présente une surface d'appui permettant un appui du boîtier (11) dans un appareil de mise en œuvre de laser (20) ou une station de calibrage.

6. Système selon la revendication 1, **caractérisé en ce que** l'unité d'évaluation est en liaison avec un appareil de mise en œuvre de laser, en particulier un appareil de mise en œuvre de laser permettant de mettre en œuvre des fibres optiques.

7. Système selon l'une quelconque des revendications précédentes, **caractérisé en ce que** l'outil d'analyse est conçu pour traiter des données en temps réel.

8. Utilisation d'un système comprenant un dispositif de test (10) permettant d'ajuster un dispositif laser d'un appareil de mise en œuvre de laser, en particulier d'un appareil de mise en œuvre de laser permettant de mettre en œuvre des fibres optiques, et une unité d'évaluation permettant d'évaluer les données du dispositif de test (10), dans laquelle le dispositif de test (10) et l'unité d'évaluation sont transportables, et dans laquelle
le dispositif de test (10) est agencé au niveau de l'appareil de mise en œuvre de laser et le dispositif laser de l'appareil de mise en œuvre de laser est actionné, et
les valeurs détectées par un capteur du dispositif de test (10) sont transférées au moins partiellement vers une unité d'évaluation et le capteur est conçu pour détecter des coordonnées de contour, une intensité lumineuse et une répartition d'intensité,
**caractérisée en ce que** l'unité d'évaluation comprend un outil électronique d'analyse afin d'évaluer les données obtenues par le dispositif de test, de sorte que la position et l'orientation d'un dispositif laser (25) de l'appareil de mise en œuvre de laser peuvent être ajustées ou modifiées en se basant sur les coordonnées de contour, l'intensité lumineuse et la répartition d'intensité du rayonnement laser détecté.

9. Utilisation selon la revendication 8, **caractérisée en ce qu'**une influence est exercée sur l'appareil de mise en œuvre de laser en se basant sur l'unité d'évaluation.
